# EUROPEAN PATENT SPECIFICATION

(11) **EP 1 700 752 B1**
(45) Date of publication and mention of the grant of the patent: **06.03.2013**
(21) Application number: 04819796.6
(22) Date of filing: 29.11.2004
(51) Int. Cl.: B60R 21/239, B60R 21/276

(54) **PRESSURE REGULATOR OF AIR BAG FOR VEHICLE**
DRUCKREGLER FÜR EINEN AIRBAG FÜR EIN FAHRZEUG
REGULATEUR DE PRESSION D'UN AIR BAG DESTINE A UN VEHICULE

(30) Priority: 01.12.2003 JP 2003401373
(43) Date of publication of application: 13.09.2006
(73) Proprietor: AUTOLIV DEVELOPMENT AB, 447 83 Vargarda (SE)
(72) Inventor: KORECHIKA, Koji, c/o Autoliv K.K., Yokohama-shi, Kanagawa 2220033 (JP)
(74) Representative: Beattie, Alex Thomas Stewart
(86) International application number: PCT/JP2004/017687
(87) International publication number: WO 2005/054015

(56) References cited:
- DE-A1- 19 805 063
- JP-A- 6 144 148
- JP-A- 9 328 053
- JP-A- 2001 260 799
- JP-A- 2002 274 307
- JP-A- 2003 503 256
- JP-A- 2004 034 767
- JP-A- 2004 090 812
- JP-A- 2004 114 915
- JP-B1- 47 021 048
- JP-U- 48 024 135
- JP-Y1- 50 000 599

## Description

### Technical Field

The invention relates to an automotive airbag pressure adjustment device capable of potentially reducing the extent of accidental injury to a vehicle occupant by preventing an excessive rise in internal airbag pressure.

### Prior Art

An airbag used in a conventional automotive airbag system, such as that described in Reference Document 1, is equipped with gas pressure release holes as means of preventing an excessive rise in pressure within the airbag, and reducing the extent of potential injury to the vehicle occupant, when the airbag is pressurized by an inflator device.
[Reference Document 1] Japanese unexamined patent publication No.H8-207689 (A1)
JP 2001260799 provides an air bag device in which a valve is opened when gas pressure within an air bag is equal to or greater than a predetermined pressure so that gas can be released, and in which the valve is elastically closed after evacuation, with the open area of a gas outflow port being controllable depending on the gas pressure.

### Disclosure of the Invention

### Shortcomings Resolved by the Invention

Conventionally employed airbag pressure release holes are of a uniform diameter. There occurs a sudden and significant rise in internal airbag pressure at the moment the airbag strikes the vehicle occupant. The uniform diameter pressure release holes are unable to lower the internal airbag pressure immediately, therefore increasing the extent of potential injury to the vehicle occupant caused by airbag deployment.

The present invention, which has been construed as a result of thorough study of this problem, is an automotive airbag pressure adjustment apparatus capable of preventing an excessive rise in internal airbag pressure, and is thus able to reduce the extent of potential injury caused to a vehicle occupant as a result of airbag deployment.

### Means of Overcoming Shortcomings in the Prior Art

The automotive airbag pressure adjustment apparatus invention includes a cylinder connected to a pressure release hole formed in an automotive airbag inflated by gas infused from an inflator to allow the gas in said airbag to flow there into, a piston, installed within said cylinder, the piston having a piston head which establishes a pressure receiving surface across the pressure release hole, the piston operating by pressure applied by the gas infused into the cylinder, a piston skirt extending from the piston head, along the internal wall of the cylinder and separated by a small clearance therefrom, an o-ring installed on the perimeter of the piston skirt as means of sealing the small clearance, an energizing member installed within the cylinder, the energizing member applying pressure to said piston in a direction opposing the direction of pressure generated against said piston by the gas, and a gas outlet formed in the cylinder, the gas outlet being variably opened to an extent determined by the movement of said piston as means of releasing gas pressure within said cylinder.

Preferably, the gas outlet is formed between a connecting portion formed on the end of said cylinder joining to said pressure release hole and an air escape orifice formed on the opposing end of said cylinder.

Advantageously, a first stopper part is formed in said cylinder as means of limiting the movement of said piston, in the direction in which said piston is energized by said energizing member, at a location at which said gas outlet is completely closed by said piston.

Conventiently, a second stopper part is formed in said cylinder as means of limiting the movement of said piston, in the direction in which said piston is energized by the gas pressure, at a location at which said gas outlet is completely open by said piston.

### Effect of the Invention

The present invention is an automotive airbag pressure adjustment apparatus capable of preventing an excessive rise in internal airbag pressure, thereby making it possible to reduce the extent of potential injury to the vehicle occupant when the airbag is inflated.

### Preferred Embodiments of the Invention

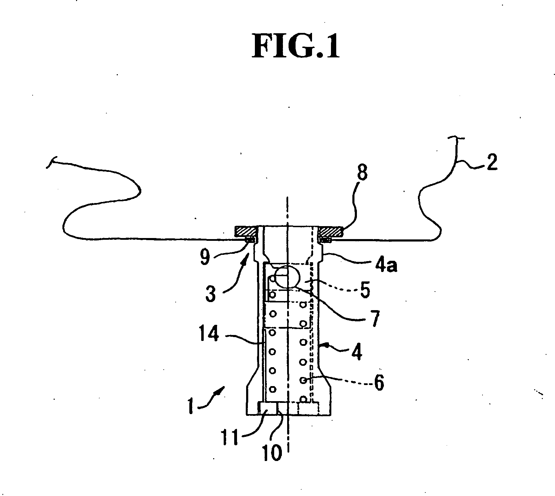

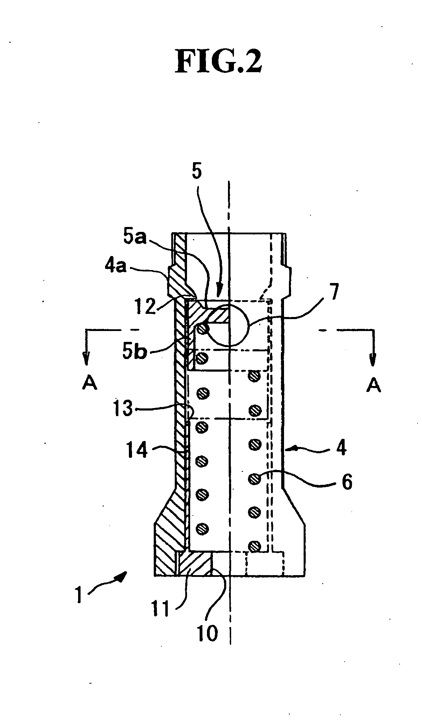

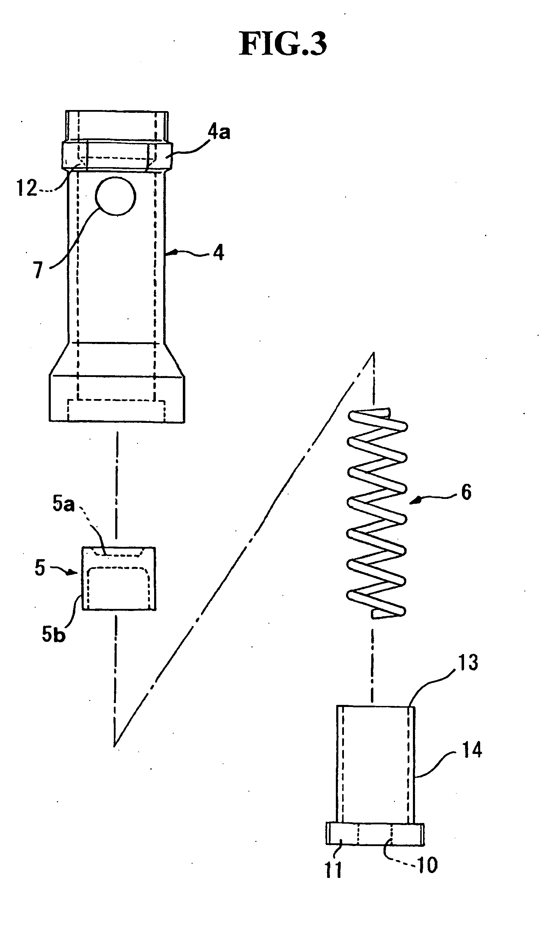

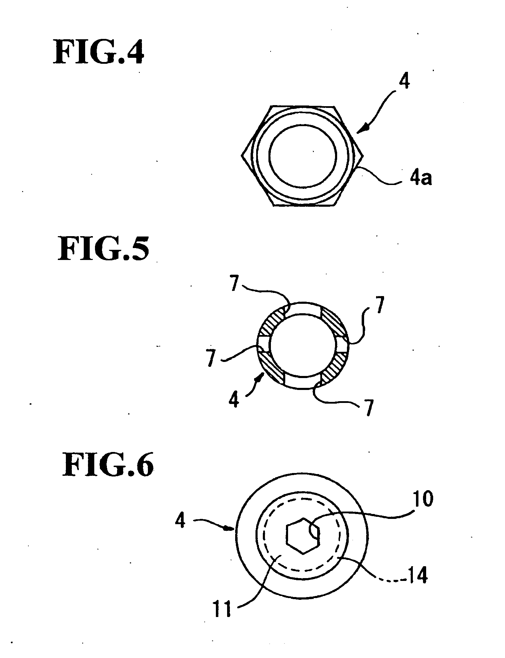

The following describes a preferred embodiment of the automotive airbag pressure adjustment apparatus, as specified by the invention, with reference to the attached drawings. This embodiment describes the invention in the form of automotive airbag pressure adjustment apparatus 1 (hereafter referred to as pressure adjustment apparatus 1) which essentially comprises, as shown in Fig. 1 through Fig. 6, a cylinder 4 which connects to a pressure release hole (vent) 3 formed in an airbag 2 so as to allow gas, which is infused into the airbag 2 from an inflator device, to flow into the cylinder 4 from the airbag 2; a piston 5 which is movably installed within the cylinder 4, and which moves as a result of pressure generated by gas entering the cylinder 4; a coil spring 6 which is installed within the cylinder 4 as an energizing member to energize piston 5 in the direction opposing the gas pressurization direction; and a gas outlet 7 which, in order to release pressure within the cylinder 4, is opened to an extent determined by the displacement of the piston 5.

A plurality of pressure release holes 3 are provided with the airbag 2 to allow the escape of gas from the internal region of the airbag 2 to the external environment as means of preventing potential injury to the vehicle occupant resulting from the airbag 2 becoming excessively hardened by gas pressure generated by the infusion of gas from the inflator device when the airbag 2 is expanded. As specified in this embodiment, the cylinder 4, which is the main component of the pressure adjustment apparatus 1, may be installed to any number of pressure release holes 3, and may be effectively used with airbags 2 constructed of metal, synthetic resin, or other material.

The cylinder 4 is a hollow cylindrical structure having open axial ends, and may be constructed from any appropriate material such as metal or synthetic resin. It is obvious that the shape of the cylinder 4 is not limited to the cylindrical, but may also be formed to any operable configuration. The hollow internal region of the cylinder 4 connects to the internal region of the airbag 2 through the pressure release hole 3, thus forming a structure through which the infused gas within the airbag 2 also flows into the cylinder 4. One end of the cylinder 4 is inserted into the internal region of the airbag 2 through the pressure release hole 3. The aforesaid one end of the cylinder 4 includes an integrally formed hex-shaped bolt part 4a as a connecting portion at which the cylinder 4 is attached to the airbag 2 by a threaded nut 8 within the airbag 2. A ring grommet 9, which is engaged into the pressure release hole 3 in the airbag 2, is sandwiched between the nut 8 and the bolt part 4a when the latter is tightened against the former, by a wrench or other appropriate tool, as means of connecting the cylinder 4 to the pressure release hole 3. The other end of the cylinder 4 not attached to the airbag 2 is formed to a larger external diameter, and accepts a sleeved hollow hex bolt 11 which screws into the other end of the cylinder 4 to provide an air escape orifice 10 and seat for the coil spring 6.

A structure is thus formed whereby one end of the cylinder 4 connects to the airbag 2, the other end provides the air escape orifice 10, and the piston 5 may move freely in the axial direction within a hollow cylindrical chamber in the cylinder 4. The piston 5 includes a piston head 5a which establishes a pressure receiving surface across the pressure release hole 3, and a piston skirt 5b which extends from the piston head 5a along the internal wall of the cylinder 4, separated by a small clearance therefrom, and in a direction leading toward the hollow hex bolt 11. The piston 5 may be constructed from metal, synthetic resin, or other appropriate material. Pressure created by gas flowing into the cylinder 4 from the airbag 2, via the pressure release hole 3, is applied to the piston head 5a to operate the piston 5. The piston head 5a may be formed with a concave surface if desired. Moreover, if required, an O-ring may be installed on the perimeter of piston skirt 5b as means of sealing the gap between the inner wall of the cylinder 4 and the external perimeter of the piston skirt 5b

Furthermore, the coil spring 6 is compressed in the region between the piston 5 and hollow hex bolt 11, by means of one end being inserted into the piston skirt 5b and contacting the piston head 5a, and the other end being in contact with the hollow hex bolt 11. The coil spring 6 seats against the hollow hex bolt 11, and is thereby able to apply pressure to piston 5 in a direction opposing that in which the piston 5 is pressurized by the gas. In other words, the piston 5 displaces in the cylinder 4 while compresses the coil spring 6 by gas pressure within the cylinder 4.

Gas pressure is reduced in the cylinder 4 by the piston 5 moving along the gas outlet 7 which is positioned in the region of the piston stroke between the hollow hex bolt 11 and the hex-shaped bolt part 4a. In other words, the gas outlet 7 is formed to a diameter which allows the appropriate release of gas, which flows from the airbag 2 into the cylinder 4, to the external environment. As shown in the drawings, four gas outlets 7 are formed at 90° radial intervals in the cylinder 4 with two opposing ports formed to the same diameter, and the other two opposing ports are formed to a larger diameter. Both the diameter and number of gas outlets 7, however, may be determined according to the desired gas escape velocity. The extent to which gas outlets 7 are opened is determined by the movement of the piston 5 against the pressure applied by the coil spring 6. In other words, a smaller amount of movement of the piston 5 opens the gas outlets 7 to a lesser extent, and a larger amount of movement opens the gas outlets 7 to a greater extent.

Moreover, a first stopper part 12 is formed as an integral inwardly protruding part of the inner wall of the cylinder 4 and limits the movement of the piston 5 in the direction energized by the coil spring 6, at a location at which gas outlets 7 are sealed from the interior of the airbag 2. The first stopper part 12 may also be formed as a ring-shaped structure around the inner wall of the cylinder 4, or in the form of ribs placed at appropriate radial intervals along the internal wall of the cylinder 4. Coil spring 6 is installed within the cylinder 4 in a compressed state as a result of the travel of piston 5 being restricted by the first stopper part 12. The extent of compression and rated load of the coil spring 6 determines the minimum internal cylinder gas pressure required to move the piston 5. When the pressure within the cylinder 4 exceeds the load applied by the coil spring 6, the piston 5 moves and exposes the gas outlet 7, to a corresponding amount, thus making it possible to adjust the pressure within the cylinder 4 and the corresponding pressure within the airbag 2.

A sleeve 14, which is formed as an integral extending part of one end of the hollow hex bolt 11, is inserted into the cylinder 4. The upper end of the sleeve 14 forms a second stopper part 13 which limits the travel of the piston 5 against gas pressure, in the gas pressurization direction, at a location where the piston 5 has completely exposed the gas outlets 7. The second stopper part 13 may also be formed as a ring-shaped structure around the inner wall of the cylinder 4, or in the form of circumferential ribs placed at appropriate radial intervals along the internal wall of the cylinder 4. The second stopper part 13 prevents the piston 5 from moving beyond the point at which the gas outlets 7 are fully exposed, prevents the displacement of the piston 5 beyond what is required, and thus hastens the return of the piston 5 after the pressure within the cylinder 4 is reduced.

The following will explain operation of the pressure adjustment apparatus 1 as structured in the previously noted embodiment. The pressure adjustment apparatus 1 is first assembled by inserting the piston 5 and then the coil spring 6 into the cylinder 4 after which the sleeved hollow hex bolt 11 is screwed tightly into the cylinder 4. The pressure adjustment apparatus 1 can be used with various types of airbag 2 and offers a wide variety of application due to its extremely simple structure comprising only four components, ease of manufacture, and installation in the form of a single completed component. Moreover, the pressure adjustment apparatus 1 is easily and simply installed by inserting the cylinder 4 into the pressure release hole (vent) 3 in the airbag 2, and tightening the nut 8 to the hex-shaped bolt part 4a in the form of sandwiching the airbag 2.

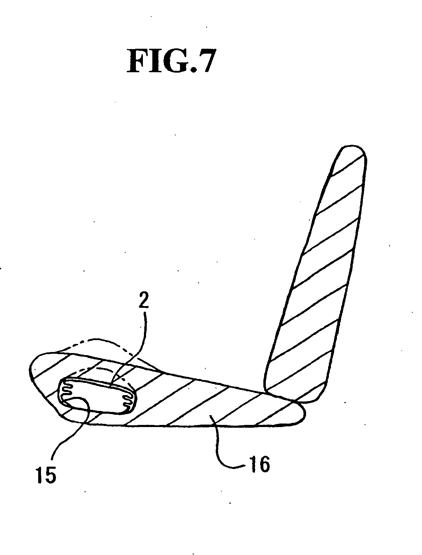

The pressure adjustment apparatus 1 may be installed to a driver-side airbag, passenger-side airbag, or side curtain airbag, and may be further installed to a seat cushion airbag 2 as illustrated in Fig. 7. Locating the airbag 2 at space 15 within seat cushion 16, that is, positioning the airbag 2 at the forward part of the seat cushion 16, has the effect of raising seat cushion 16 when the airbag 2 is inflated by gas from the inflator device, as a result of collision or other like event, and thus prevents the hips of the vehicle occupant from moving forward.

To further describe the operation of the pressure adjustment apparatus 1, a part of the gas enters the cylinder 4 when the airbag is expanded by the infusion of gas from the inflator device. Because the internal region of the cylinder 4 is connected to the internal region of the airbag 2, the pressure within both the cylinder 4 and airbag 2 is approximately equivalent. The piston 5 will begin to move when the pressure of the incoming gas exceeds the rated load of the coil spring 6. As gas pressure increases within the cylinder 4, the piston 5 moves against the coil spring 6 in a direction that sequentially opens the gas outlets 7, the extent of opening of the gas outlets 7 being determined by the position of the piston 5. Due to the gas outlets 7 opening in relation to the extent of displacement of the piston 5, and due to the gas outlets 7 connecting to the internal region of the cylinder 4, it becomes possible to release the gas pressure within the cylinder 4 and airbag 2, by discharging the gas through the cylinder 4 to the external environment in this manner. As gas pressure within the cylinder 4 falls below the rated load of the coil spring 6, the piston 5 is displaced by the coil spring 6 in the direction in which the gas outlets 7 are sequentially closed.

With this structure, the piston 5 is moved by the pressure within the cylinder 4 and the load rating of the coil spring 6 to control the extent of opening of the gas outlets 7 between full closed and full open positions, thus making it possible to release the gas pressure within the cylinder 4, and consequently the airbag 2, in relation to the extent of opening of the gas outlets 7.

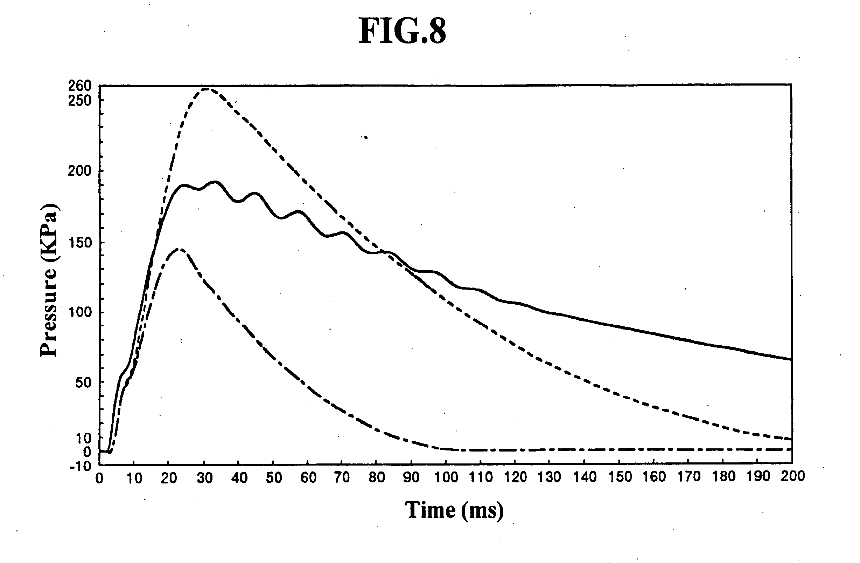

Fig. 8 is a time line graph comparing the differences in the internal pressure of the airbag 2 when equipped with the pressure adjustment apparatus 1 (solid line), when equipped only with gas outlets 10mm in diameter (broken line), and when equipped only with gas outlets 20mm in diameter (chain line). The pressure within the airbag equipped only with 10mm diameter gas outlets rises sharply immediately after deployment, thus hardening the airbag to a point capable of causing injury to the vehicle occupant. In comparison, the pressure within the airbag equipped only with 20mm diameter gas outlets does not rise sharply due to the quick escape of gas to the external environment, but is not able to apply sufficient pressure to stabilize the vehicle occupant for the amount of time required to prevent injury.

In operation, the pressure adjustment apparatus 1 of this embodiment does not allow the pressure within the airbag 2 to rise immediately after deployment to the extent of that of the airbag with 10mm diameter gas outlets, but still allows the airbag 2 to attain an effective operating pressure which then decreases in sequential pulsations corresponding to the displacement of the piston 5 over a period of time. In this case the airbag 2 does not become excessively hard, but attains sufficient pressure to protect the vehicle occupant at the time of initial deployment. In subsequent inflation, the pressure adjustment apparatus 1 ensures a comparatively long period of time to restrain the vehicle occupant, whereby protecting the occupant and lowering the extent of potential injury. Gas within the airbag 2 also escapes from other pressure release holes (vents) 3, thus allowing the gas pressure within airbag 2 to be further sequentially reduced.

In respect to the previously noted problem whereby the internal pressure of the airbag 2 suddenly and sharply rises at the time the airbag 2 strikes the vehicle occupant, the pressure adjustment apparatus 1 makes it possible for the gas outlets 7 to be controllably opened, by means of the mechanism comprising internal cylinder pressure, the operation of the coil spring 6, and the reciprocal movement of the piston 5, to an extent allowing only a predetermined amount of the internal pressure of the airbag 2 to be momentarily released to the external environment, thereby preventing an excessive rise in the pressure within the airbag 2, and thus lowering the extent of potential injury to the vehicle occupant.

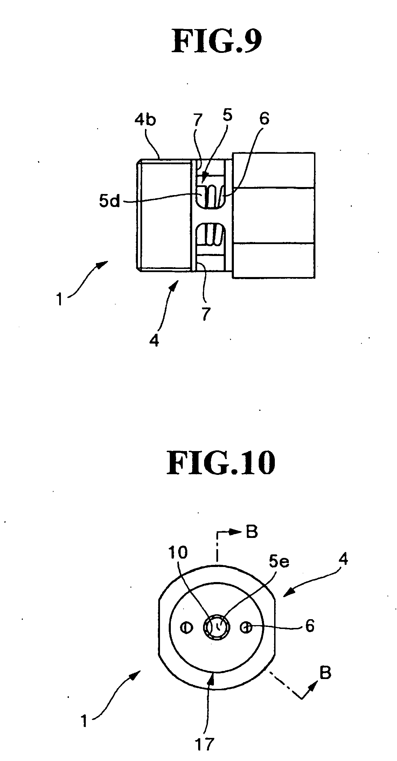

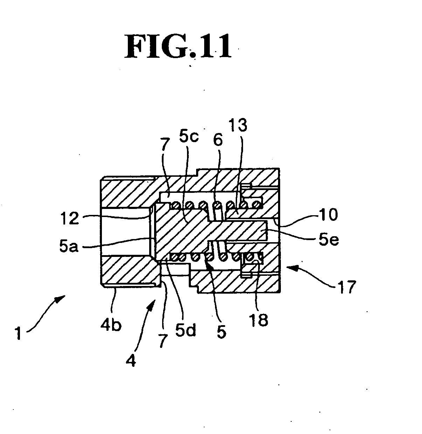

Figs. 9, 10, and 11 illustrate a further embodiment of the pressure adjustment apparatus 1. This embodiment differs from the previous in regard to the configuration of the piston 5 and the replacement of the hollow hex bolt 11 with spring seat 17. In this further embodiment the piston 5 comprises a solid piston body part 5c, flanged part 5d which is formed on the piston head 5a of the piston body part 5c, and slide guide 5e which protrudes from the piston body part 5c. The flanged part 5d is arranged to face to the surface of the first stopper part 12 formed in the cylinder 4 to contact with and release from the first stopper part 12. The spring seat 17 threads into the end of the cylinder 4 opposing the first stopper part 12. The spring seat 17 includes a second stopper part 13 formed as a sleeve-like structure extending from the center of the spring seat 17 toward the piston 5, hollow bore 10 which is formed within the second stopper part 13 to function as an air release orifice in which the slide guide 5e is inserted, and circular channel 18 formed around the perimeter of the second stopper part 13. One end of the coil spring 6 is inserted into the circular channel 18 of the spring seat 17, and the other end is contacted with the flange 5d of the piston 5. Moreover, the threaded nut 8 (see Fig. 1) threads onto threaded part 4b which is formed on one end of the cylinder 4.

In this embodiment, the piston 5 begins to move when the rising pressure within the cylinder 4, resulting from the flow of gas from the airbag 2, exceeds the rated load of the coil spring 6. The piston 5, which moves reciprocally in relation to the extent of opposing pressures applied by the gas and the coil spring 6 within the cylinder 4, slides against the gas outlets 7 to various positions at which the gas outlets 7 are appropriately closed or opened, thus releasing the gas pressure within the cylinder 4 and airbag 2 to the external environment in relation to the extent of opening of the gas outlets 7. This embodiment therefore provides the same operational effect as that of the previous embodiment.

### Brief Description of the Drawings

Fig. 1 is an outline drawing illustrating a preferred embodiment of the automotive airbag pressure adjustment apparatus invention as installed to an airbag.
Fig. 2 is a cross section of part of the automotive airbag pressure adjustment apparatus invention shown in Fig. 1.
Fig. 3 is an exploded view of the automotive airbag pressure adjustment apparatus invention shown in Fig. 1.
Fig. 4 is a view of the top of the automotive airbag pressure adjustment apparatus invention shown in Fig. 1.
Fig. 5 is a cross section taken from a plane defined by line A-A in Fig. 2.
Fig. 6 is a view of the bottom of the automotive airbag pressure adjustment apparatus.
Fig.7 is an outline drawing illustrating the automotive airbag pressure adjustment apparatus used with an airbag installed within a seat cushion as a PRC.
Fig. 8 is a graph illustrating the operating performance of the automotive airbag pressure adjustment apparatus invention.
Fig. 9 is a front view of an additional preferred embodiment of the automotive airbag pressure adjustment apparatus invention.
Fig. 10 is a side view of the automotive airbag pressure adjustment apparatus invention shown in Fig. 9.
Fig. 11 is a cross section taken from a plane defined by line B-B in Fig.10.

### Explanation of the numerals

- 1:: pressure adjustment apparatus
- 2:: automotive airbag
- 3:: pressure release hole (vent)
- 4:: cylinder
- 4a:: hex-shaped bolt part
- 5:: piston
- 6:: coil spring
- 7:: gas outlet
- 10:: air escape orifice
- 12:: first stopper part
- 13:: second stopper part

## Claims

1. An automotive airbag pressure adjustment apparatus (1) comprising
a cylinder (4) connected to a pressure release hole (3) formed in an automotive airbag (2) inflated by gas infused from an inflator to allow the gas in said airbag (2) to flow there into,
a piston (5), installed within said cylinder (4), the piston (5) having a piston head which_establishes a pressure receiving surface across the pressure release hole, the piston (5) operating by pressure applied by the gas infused into the cylinder (4),
a piston skirt extending from the piston head, along the internal wall of the cylinder (4) and separated by a small clearance therefrom,
an o-ring installed on the perimeter of the piston skirt (5b) as means of sealing the small clearance,
an energizing member (6) installed within the cylinder (4), the energizing member (6) applying pressure to said piston (5) in a direction opposing the direction of pressure generated against said piston (5) by the gas, and
a gas outlet (7) formed in the cylinder (4), the gas outlet (7) being variably opened to an extent determined by the movement of said piston (5) as means of releasing gas pressure within said cylinder (4).

2. An automotive airbag pressure adjustment apparatus (1) according to claim 1, wherein said gas outlet (7) is formed between a connecting portion formed on the end of said cylinder (4) joining to said pressure release hole and an air escape orifice (10) formed on the opposing end of said cylinder (4).

3. An automotive airbag pressure adjustment apparatus (1) according to claim 1 or 2, wherein a first stopper part (12) is formed in said cylinder (4) as means of limiting the movement of said piston (5), in the direction in which said piston (5) is energized by said energizing member (6), at a location at which said gas outlet (7) is completely closed by said piston (5).

4. An automotive airbag pressure adjustment apparatus (1) according to any of claims 1 through 3, wherein a second stopper part (13) is formed in said cylinder (4) as means of limiting the movement of said piston (5), in the direction in which said piston (5) is energized by the gas pressure, at a location at which said gas outlet (7) is completely open by said piston (5).

## Patentansprüche

1. Kraftfahrzeugairbag-Druckanpassungsvorrichtung (1), umfassend
einen Zylinder (4), der mit einer Druckentlastungsbohrung (3) verbunden ist, die in einem Kraftfahrzeugairbag (2) ausgebildet ist, der mit Gas gefüllt ist, das von einem Gasgenerator zugeführt wird, um zu ermöglichen, dass das Gas in dem Airbag (2) dort hineinströmt,
einen Kolben (5), der in dem Zylinder (4) eingebaut ist, wobei der Kolben (5) einen Kolbenboden aufweist, der eine druckaufnehmende Fläche über die Druckentlastungsbohrung herstellt, wobei der Kolben (5) mit dem Druck arbeitet, der von dem Gas ausgeübt wird, das in den Zylinder (4) geleitet wird,
ein Kolbenhemd, das von dem Kolbenboden aus entlang der Innenwand des Zylinders (4) verläuft und durch einen schmalen Spalt davon getrennt ist,
einen O-Ring, der am Umfang des Kolbenhemds (5b) als Mittel zum Abdichten des schmalen Spalts montiert ist,
ein Energiezufuhrelement (6), das in dem Zylinder (4) eingebaut ist, wobei das Energiezufuhrelement (6) in eine Richtung entgegen der Richtung des Drucks, der von dem Gas gegen den Kolben (5) erzeugt wird, Druck auf den Kolben (5) ausübt, und
eine Gasaustrittsöffnung (7), die in dem Zylinder (4) geformt ist, wobei die Gasaustrittsöffnung (7) veränderlich so weit geöffnet ist, wie durch die Bewegung des Kolbens (5) vorgegeben ist, als Mittel zum Verringern von Gasdruck in dem Zylinder (4).

2. Kraftfahrzeugairbag-Druckanpassungsvorrichtung (1) nach Anspruch 1, wobei die Gasaustrittsöffnung (7) ausgebildet ist zwischen einem Verbindungsabschnitt, der an dem Ende des Zylinders (4) geformt ist, das mit der Druckentlastungsbohrung verbunden ist, und einer Luftaustrittsöffnung (10), die an dem gegenüberliegenden Ende des Zylinders (4) geformt ist.

3. Kraftfahrzeugairbag-Druckanpassungsvorrichtung (1) nach Anspruch 1 oder 2, wobei ein erstes Anschlagteil (12) in dem Zylinder (4) geformt ist, als Mittel zum Einschränken der Bewegung des Kolbens (5) in der Richtung, in der dem Kolben (5) von dem Energiezufuhrelement (6) Energie zugeführt wird, an einer Stelle, an der die Gasaustrittsöffnung (7) vollständig durch den Kolben (5) verschlossen ist.

4. Kraftfahrzeugairbag-Druckanpassungsvorrichtung (1) nach einem der Ansprüche 1 bis 3, wobei ein zweites Anschlagteil (13) in dem Zylinder (4) geformt ist, als Mittel zum Einschränken der Bewegung des Kolbens (5) in der Richtung, in der dem Kolben (5) durch den Gasdruck Energie zugeführt wird, an einer Stelle, an der die Gasaustrittsöffnung (7) vollständig durch den Kolben (5) geöffnet ist.

## Revendications

1. Appareil d'ajustement de la pression (1) d'un airbag automobile comprenant
un cylindre (4) connecté à un trou de décharge de la pression (3) formé dans un airbag automobile (2) gonflé par du gaz insufflé par un générateur de gaz pour permettre au gaz dans ledit airbag (2) de s'y écouler,
un piston (5), installé dans ledit cylindre (4), le piston (5) présentant une tête de piston qui établit une surface de réception de pression à travers le trou de décharge de la pression, le piston (5) fonctionnant par pression appliquée par le gaz insufflé dans le cylindre (4),
une jupe de piston s'étendant de la tête de piston, le long de la paroi interne du cylindre (4) et séparée de celle-ci par un petit jeu,
un joint torique installé sur le périmètre de la jupe de piston (5b) en tant que moyen d'obturation du petit jeu,
un élément d'excitation (6) installé dans le cylindre (4), l'élément d'excitation (6) appliquant une pression sur ledit piston (5) dans une direction opposée à la direction de pression générée contre ledit piston (5) par le gaz, et
une sortie de gaz (7) formée dans le cylindre (4), la sortie de gaz (7) étant ouverte de manière variable jusqu'à un point déterminé par le mouvement dudit piston (5) en tant que moyen de décharge de la pression du gaz dans ledit cylindre (4).

2. Appareil d'ajustement de la pression (1) d'un airbag automobile selon la revendication 1, dans lequel ladite sortie de gaz (7) est formée entre une partie de connexion formée sur l'extrémité dudit cylindre (4) se joignant audit trou de décharge de pression et un orifice d'échappement d'air (10) formé sur l'extrémité opposée dudit cylindre (4).

3. Appareil d'ajustement de la pression (1) d'un airbag automobile selon la revendication 1 ou 2, dans lequel une première pièce d'arrêt (12) est formée dans ledit cylindre (4) en tant que moyen de limitation du mouvement dudit piston (5), dans la direction dans laquelle ledit piston (5) est excité par ledit élément d'excitation (6), à un emplacement auquel ladite sortie de gaz (7) est complètement fermée par ledit piston (5).

4. Appareil d'ajustement de la pression (1) d'un airbag automobile selon l'une quelconque des revendications 1 à 3, dans lequel une seconde pièce d'arrêt (13) est formée dans ledit cylindre (4) en tant que moyen de limitation du mouvement dudit piston (5), dans la direction dans laquelle ledit piston (5) est excité par la pression du gaz, à un emplacement auquel ladite sortie de gaz (7) est complètement ouverte par ledit piston (5).
